# FASCICULE DE BREVET EUROPEEN

(11) **EP 0 567 367 B1**
(45) Date de publication et mention de la délivrance du brevet: **25.06.1997**
(21) Numéro de dépôt: 93400908.5
(22) Date de dépôt: 07.04.1993
(51) Int. Cl.: B65G 53/66, B65G 53/06, B28C 5/12

(54) **Procédé pour le transport pneumatique de matériaux en vrac, tels que mortier de chape, béton, sable ... et transporteur-malaxeur mettant en oeuvre ce procédé**
Pneumatisches Transportverfahren für Schüttgüter wie Mörtel, Beton oder Sand und Einrichtung zum Transportieren und Mischen zur Durchführung des Verfahrens
Pneumatic transport method for bulk materials like mortar, concrete or sand, and transporting and mixing device for carrying out the method

(30) Priorité: 15.04.1992 FR 9204665
(43) Date de publication de la demande: 27.10.1993
(73) Titulaire: Vidal, Lucien René, F-33360 Latresne (FR)
(72) Inventeur: Vidal, Lucien René, F-33360 Latresne (FR)
(74) Mandataire: Hasenrader, Hubert

(56) Documents cités:
- DE-A- 1 456 612
- DE-A- 2 946 813
- DE-U- 7 027 374
- FR-A- 1 539 649
- GB-A- 2 202 163
- SOVIET INVENTIONS ILLUSTRATED Section PQ, Week 8532, 19 Septembre 1985 Derwent Publications Ltd., London, GB; Class Q35, AN 85-195206
- SOVIET INVENTIONS ILLUSTRATED Section PQ, Week E31, 15 Septembre 1982 Derwent Publications Ltd., London, GB; Class Q35, AN K3807 E

## Description

La présente invention concerne un procédé pour le transport pneumatique de matériaux en vrac, tels que mortier de chape, sable, gravillons ou autres et un transporteur malaxeur perfectionné mettant en oeuvre ce procédé.

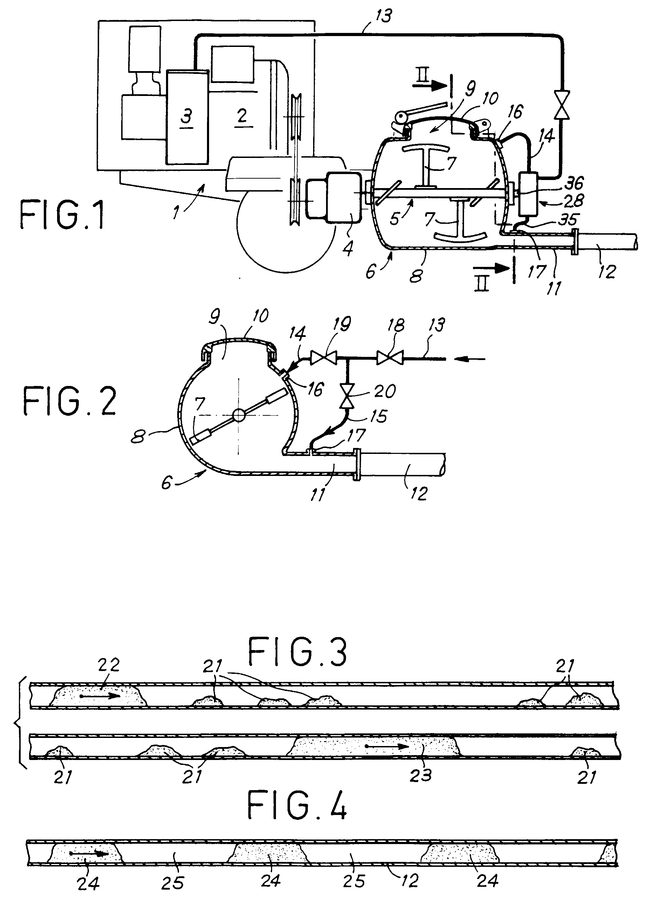

Comme le montrent les figures 1 et 2 du dessin annexé, les transporteurs-malaxeurs connus comportent en général une remorque 1 sur laquelle est monté un moteur 2, du type Diesel ou électrique entraînant un compresseur d'air 3 et, par l'intermédiaire d'un réducteur 4, le rotor 5 d'un malaxeur 6. Le rotor 5 muni de pales 7 est monté tournant dans une cuve 8 présentant, à sa partie supérieure, une ouverture de chargement 9 fermée par un couvercle 10 et, à sa partie inférieure, un raccord 11 sur lequel est branchée une tuyauterie 12 de transport.

La tubulure de sortie du compresseur 3 est reliée par une conduite 13 et deux dérivations 14 et 15 sur une tubulure 16 placée en tête de la cuve 8 et respectivement sur une tubulure 17 du raccord 11, une vanne générale 18 étant montée sur la conduite 12 et des vannes individuelles 19 et 20 étant montées sur les dérivations 14 et 15.

Les vannes 18 à 20 étant ouvertes, l'air comprimé est introduit en continu dans la cuve 8 et dans le raccord 11.

L'air comprimé introduit en continu dans la cuve 8 entraîne le matériau vers la sortie en quantité variable puisque les pales de malaxage provoquent un déplacement discontinu de ce matériau à l'intérieur de la cuve.

L'air comprimé introduit en continu après la sortie de la cuve, fluidifie dans la tuyauterie 12 le mélange air-matériau qui sort de la cuve.

Le mélange ainsi transporté est variable en densité et s'écoule de façon anarchique comme cela est schématisé sur la figure 3. Pour plus de clarté, cette schématisation rapproche les amas de matériaux, alors qu'en réalité ceux-ci sont beaucoup plus espacés les uns des autres . Une partie 21 du matériau se dépose au fond de la tuyauterie en quantités plus ou moins importantes, puis d'une façon aléatoire un "tronçon" 22 de matériau dense se forme et récupère en avançant le matériau déposé. Ce tronçon se densifie et s'allonge rapidement jusqu'à former un bouchon obstructeur 23.

Il apparaît donc dans la tuyauterie 12 une succession anarchique de dépôts 21 et de tronçons 22 plus ou moins volumineux et espacés, séparés ou environnés par l'air de transport.

Ce transport s'accompagne de secousses et d'à-coups dûs aux variations de la pression qui sont inévitables du fait que la formation des tronçons n'est pas maitrisée et conduit à la croissance de bouchons obstructeurs 23. Si ceux-ci s'échappent violemment, la pression chute brusquement. S'ils se bloquent, ou bien la pression augmente brusquement et provoque leur éjection violente ou bien une opération de désobstruction s'impose.

Un autre procédé pour le transport pneumatique de matériaux en vrac selon le préambule de la revendication 1 est décrit dans le document SU-A-1 134 498. Dans ce procédé connu, le distributeur cadençant le transport des matériaux dans la tuyauterie est constitué par un cerceau fixé sur une pale du rotor.

Jusqu'à présent, pour disposer de la puissance nécessaire au malaxage, on utilise un compresseur "détaré" en débit ou entraîné par un moteur "surdimensionné".

La présente invention a pour but d'améliorer le mode de transport et de le maîtriser, afin d'obtenir un écoulement sensiblement régulier du matériau et d'éviter les à-coups et accroissements brusques de la pression, ainsi d'optimiser la puissance nécessaire au transport et d'utiliser pour le malaxage l'excédent de puissance qui jusqu'à présent était absorbé par la surpression nécessaire à l'évacuation des bouchons.

Dès lors, l'invention permet d'éviter un surdimensionnement du moteur.

Parallèlement et dès lors que le groupe motocompresseur peut travailler à un seuil de pression minimal pour le transport, la présente invention a pour but subsidiaire d'utiliser à d'autres fins, comme par exemple pour alimenter des engins de maçonnerie et de travaux publics, ce groupe à sa pression maximale.

Enfin, la présente invention vise à protéger le moteur du compresseur contre toute surcharge due au blocage du malaxeur par un gros agrégat.

L'invention concerne un procédé pour le transport pneumatique de matériaux en vrac, qui consiste à malaxer le matériau sous pression pneumatique dans une cuve branchée, à sa sortie, sur une tuyauterie de transport et concomitamment à insuffler de l'air comprimé dans ladite tuyauterie en aval de la cuve, le matériau étant malaxé à l'aide d'un rotor muni de pales susceptibles, au cours de la rotation du rotor, d'amener des pelletées de matériau devant la sortie de la cuve.

Dans le but précité, le transport dans la tuyauterie est cadencée en alimentant celle-ci de façon périodique en air comprimé à l'aide d'un organe de cadencement, raccordé à une tubulure d'injection d'air comprimé dans ladite tuyauterie et constitué par un distributeur rotatif accouplé au rotor pour synchroniser le cadencement de l'air comprimé avec l'alimentation de la tuyauterie de transport en matériau.

Selon un mode d'exécution particulièrement avantageux, le procédé consiste, en relation de temps, à faire communiquer de façon périodique la cuve avec la tuyauterie en séparant les cycles de communication par des temps d'arrêt et à injecter de l'air comprimé dans ladite tuyauterie en aval de ladite cuve suivant des cycles successifs d'injection établis, pendant les arrêts de l'écoulement du matériau et séparés par des temps sensiblement morts.

Il consiste par ailleurs, pour optimiser la puissance du moteur entraînant le compresseur et le malaxeur, à limiter la pression de l'air comprimé utilisée pour le transport du matériau et à se servir de la puissance non utilisée du moteur pour malaxer, la puissance totale du moteur étant destinée à délivrer de l'air comprimé à pression plus élevée pour d'autres travaux que le malaxage et le transport pneumatique.

L'invention concerne également un transporteur-malaxeur pour le transport pneumatique de matériaux en vrac tels que du mortier de chape, du béton, du sable, des gravillons .... comportant un malaxeur ayant une cuve branchée, à sa sortie, sur une tuyauterie de transport et un rotor muni de pales susceptibles, au cours de la rotation du rotor, d'amener des pelletées de matériau devant ladite sortie, le transporteur-malaxeur comportant, en outre, un moteur entraînant un compresseur d'air, et par l'intermédiaire d'un réducteur, le rotor du malaxeur, le compresseur étant branché sur la cuve dudit malaxeur et sur une tubulure d'injection d'air comprimé raccordée à la tuyauterie de transport en aval de ladite cuve.

Dans le but précité, le transporteur-malaxeur selon l'invention comporte au moins un organe de cadencement de l'alimentation de la tuyauterie de transport en air comprimé, cet organe étant constitué par un distributeur rotatif, branché sur le circuit d'air comprimé du compresseur et raccordé à la tubulure d'injection d'air comprimé pour diriger ou non l'air comprimé vers cette tubulure, ledit distributeur étant accouplé au rotor pour synchroniser le cadencement de l'air comprimé avec l'alimentation de la tuyauterie de transport en matériau.

Avantageusement, le transporteur-malaxeur comporte deux organes de cadencement respectivement pour la distribution du matériau et pour la distribution de l'air comprimé, ces organes de cadencement étant synchronisés entre eux.

Suivant une forme de réalisation particulière, l'organe de cadencement intervenant sur la distribution du matériau est constitué par un cerceau cylindrique faisant corps avec le rotor, s'étendant à proximité de la cuve en regard de son orifice de sortie et délimitant au moins un passage susceptible de mettre en communication l'intérieur de ladite cuve avec ledit orifice, l'ouverture angulaire limitée de ce ou ces passages déterminant la longueur des tronçons de matériau dans la tuyauterie.

Par ailleurs, l'organe de cadencement de l'air comprimé est un distributeur branché sur le circuit d'air comprimé du compresseur et dirigeant ou non cet air comprimé vers une tubulure d'injection placée sur la tuyauterie.

Le distributeur est du type rotatif et accouplé au rotor du malaxeur pour synchroniser les cadencements de matériau et d'air comprimé.

Le distributeur rotatif pour le cadencement de l'air comprimé comporte un rotor qui délimite dans un boîtier fixe au moins un alvéole tournant susceptible de mettre ou non en communication au moins deux tubulures dudit boîtier branchées la première sur l'alimentation en air comprimé et la deuxième sur la tuyauterie de transport.

Le rotor du distributeur peut avantageusement comporter au moins trois alvéoles séparés par des cloisons et défilant devant une première tubulure du boîtier branchée sur l'alimentation en air comprimé, ces alvéoles étant susceptibles de relier l'une après l'autre la première tubulure à une deuxième puis une troisième tubulures distantes angulairement en correspondance avec l'ouverture angulaire desdits alvéoles et branchées respectivement sur la tuyauterie de transport et sur la cuve du malaxeur ou sur la chambre d'une vanne à manchon écrasable pour alterner les distributions d'air comprimé.

En ce qui concerne plus spécialement l'utilisation optimale du compresseur, celui-ci coopère avec au moins un dispositif de régulation limitant à deux seuils la pression de l'air comprimé distribué, l'air comprimé distribué au seuil maximal (7 bars par exemple) étant destiné à tous travaux autres que le malaxage tandis que l'air comprimé distribué au seuil minimal (4 bars par exemple) est destiné au transport cadencé et le reste de la puissance du moteur, au malaxage.

Le dispositif de régulation comporte un organe d'obturation monté sur l'admission d'air du compresseur et piloté par deux relais réglés l'un au seuil maximal et l'autre au seuil minimal, ces relais étant sensibles à la pression de deux circuits alimentés par le compresseur et séparés l'un de l'autre par une vanne d'isolation à commande manuelle.

Dans le cas particulier où la cuve du malaxeur coopère avec une benne basculante de chargement mue par un vérin dont le piston sépare dans le cylindre une chambre de relèvement d'une chambre d'abaissement de la benne, la chambre de relèvement et la chambre d'abaissement sont raccordées à des circuits secondaires de pression maximale et respectivement de pression minimale branchés sélectivement par un distributeur à commande manuelle sur une dérivation prise sur un premier circuit principal d'alimentation reliant le compresseur au distributeur rotatif précité, entre deux vannes d'isolation dont la première isole ledit distributeur rotatif et la deuxième isole un deuxième circuit principal d'alimentation à pression maximale dérivé en amont, le dispositif de régulation considéré comportant un distributeur piloté par le circuit secondaire précité à pression maximale du vérin et susceptible d'isoler le relais pilote à seuil minimal branché sur une dérivation prise sur le premier circuit principal entre les deux vannes d'isolation.

Enfin, pour prévenir les conséquences d'un coincement du malaxeur par un gros agrégat, sachant qu'un réducteur est habituellement interposé entre le rotor du malaxeur et une transmission sans fin accouplée au motor, le réducteur est scindé en deux composants dont le carter de l'un est fixe, tandis que le carter de l'autre est pivotant et soumis aux actions antagonistes d'un organe élastique et du couple menant de la transmission.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin, outre les figures 1 à 3 qui concernent l'art antérieur :
- la figure 1 étant une élévation schématique partiellement en coupe d'un transporteur malaxeur dont certains organes connus sont perfectionnés conformément à l'invention,
- la figure 2 étant une coupe transversale prise suivant la ligne brisée II-II de la figure 1, dont certains organes sont représentés dans leur état connu et d'autres dans leur état perfectionné,
- la figure 3 étant une coupe schématique de la tuyauterie de transport illustrant un mode d'écoulement anarchique connu du matériau,
   les figures 4 à 19 qui se rapportent à l'invention.

En effet :
- la figure 4 est une vue analogue à la figure 3, montrant un écoulement cadencé conformément à l'invention,

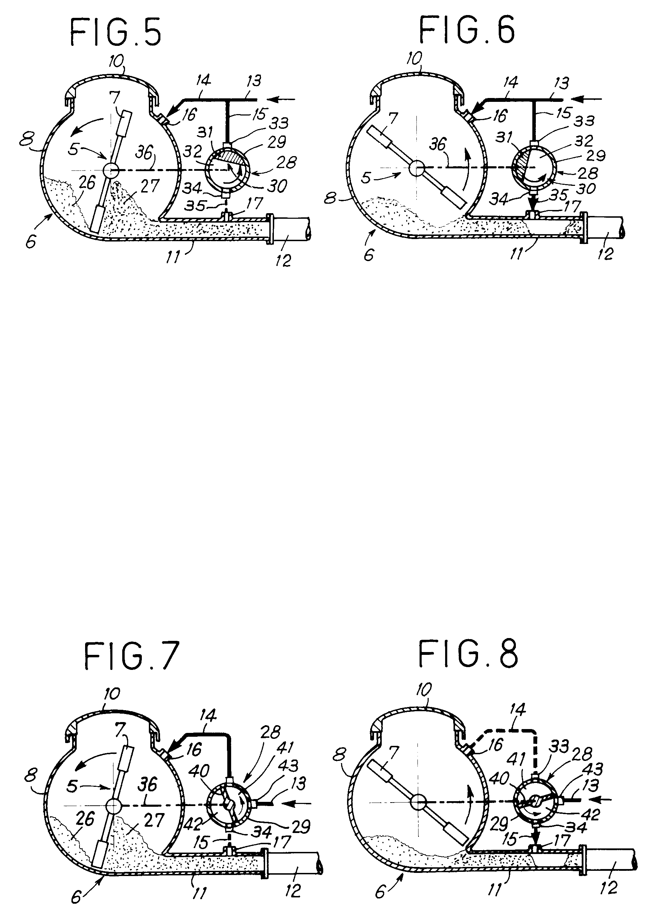

- les figures 5 et 6 sont des vues analogues à la figure 2, illustrant, dans deux positions différentes, une première forme de réalisation du cadencement appliqué à la distribution de l'air comprimé dans la tuyauterie, avec distribution permanente d'air comprimé dans la cuve du malaxeur,
- les figures 7 et 8 sont des vues analogues aux figures 5 et 6 illustrant une deuxième forme de réalisation du cadencement appliqué à la distribution de l'air comprimé de façon alternée à la cuve du malaxeur et à la tuyauterie,

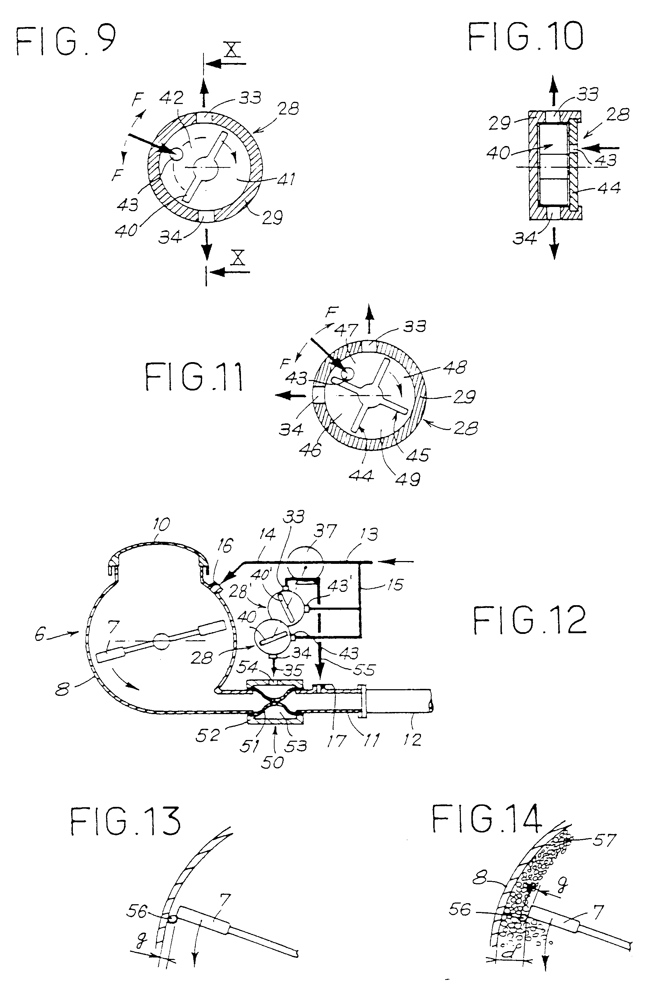

- la figure 9 est une coupe représentant une première variante de réalisation du distributeur rotatif à cadencement alterné pour les distributions de l'air comprimé à la cuve du malaxeur et à la tuyauterie, avec réglage de la proportion relative de ces distributions,
- la figure 10 est une coupe prise suivant la ligne X-X de la figure 9,
- la figure 11 est une vue analogue à la figure 9, représentant une deuxième variante,
- la figure 12 est une vue analogue à la figure 2, illustrant une troisième forme de réalisation du cadencement appliqué aux distributions alternées du matériau et de l'air comprimé à la tuyauterie, la cuve du malaxeur étant mise sous distribution permanente d'air comprimé,

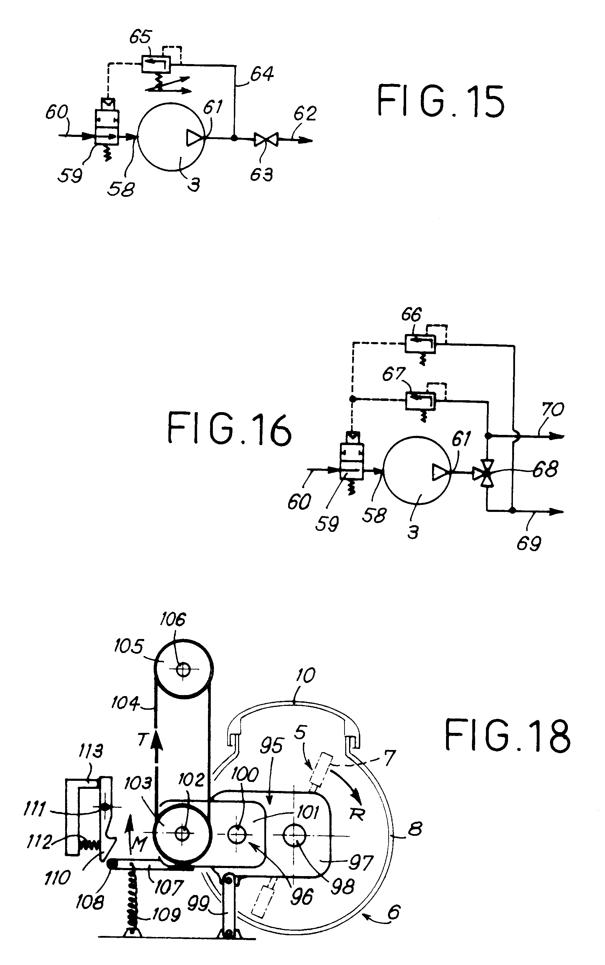

- la figure 13 est une coupe partielle montrant la cuve du malaxeur et une pale telles que disposées relativement l'une à l'autre de façon connue,
- la figure 14 est une vue analogue à la figure 13, montrant la disposition relative de la cuve et d'une pale conformément à l'invention,
- la figure 15 est un schéma illustrant un premier mode de régulation du compresseur,

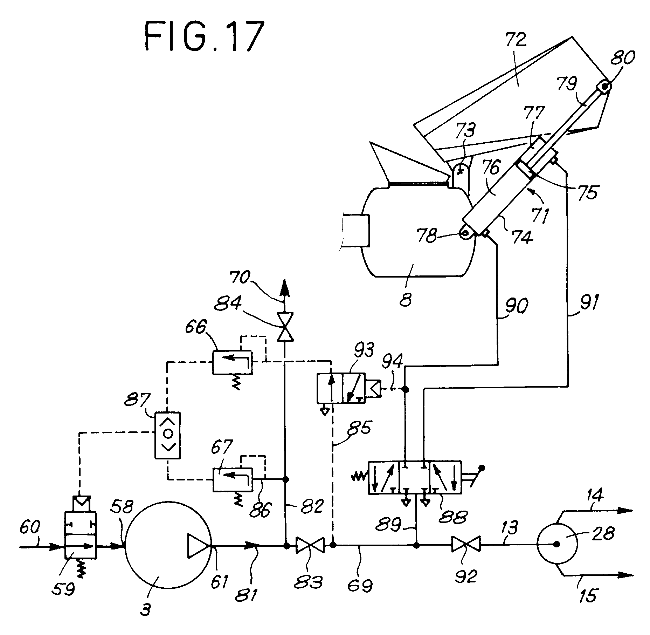

- les figures 16 et 17 sont des vues analogues à la figure 15 illustrant un deuxième et un troisième modes de régulation du compresseur,
- la figure 18 est un schéma illustrant un mode d'exécution, conforme à l'invention, de la transmission réductrice interposée entre le moteur et le rotor du malaxeur.

La figure 3 illustre l'écoulement anarchique du matériau dans la tuyauterie 12, résultant de la mise en oeuvre des moyens connus décrits dans ce qui précède en se référant aux figures 1 et 2. Ce type d'écoulement engendre des variations brusques de la pression de transport et rend nécessaire que le compresseur 2 soit détaré et débite l'air comprimé à son seuil maximal de pression.

La figure 4 illustre l'écoulement cadencé que vise à obtenir l'invention en mettant en oeuvre les moyens décrits dans ce qui suit. Cet écoulement cadencé est remarquable par le fait que sont formés des tronçons 24 de matériau sensiblement homogènes en constitution, densité et volume, ces tronçons 24 étant séparés les uns des autres par des tampons 25 d'air comprimé.

Le procédé de l'invention consiste à cadencer le transport dans la tuyauterie 12 en alimentant celle-ci de façon périodique en air comprimé (figures 5 et 6) ou bien de façon alternée en air comprimé et en matériau (figure 12).

Une première forme de réalisation illustrée par les figures 5 et 6, met en oeuvre un premier mode d'exécution du procédé qui consiste à maintenir sous pression pneumatique permanente la cuve de malaxage et à injecter de l'air comprimé dans la tuyauterie en aval de ladite cuve suivant des cycles successifs d'injection séparés par des temps sensiblement morts. Dans cette première forme de réalisation la cuve 8 du malaxeur 6 est alimentée en continu en air comprimé par la dérivation 14. Les pales 7 du rotor 5 du malaxeur mélangent les composants du matériau 26 (figure 5) et amènent devant le raccord 11 une "pelletée" de matériau 27. Celle-ci sous l'effet de la poussée tangentielle exercée par la pale correspondante et de la pression de l'air dans la cuve 8 tend à pénétrer dans le raccord 11 et à le gaver.

Par contre, la tubulure 17 du raccord 11 est alimentée périodiquement en air comprimé par un distributeur rotatif 28. Celui-ci comporte un boîtier fixe 29 dans lequel est monté tournant un rotor 30 qui, dans l'exemple représenté, est constitué par un segment cylindrique 31. Ce segment délimite dans le boîtier fixe 29 un alvéole tournant 32 susceptible (figure 6) de mettre en communication deux tubulures 33 et 34 diamétralement opposées (figure 6). La tubulure 33 est branchée sur la dérivation 15 d'alimentation en air comprimé, tandis que la tubulure 34 est reliée à la tubulure 17 du raccord 11 par un élément de conduite 35. Dans cette position (figure 6), l'air comprimé pénètre dans ledit raccord et tronçonne le matériau 27 qui y parvient en formant des tampons d'air 25. Dans une autre position illustrée par la figure 5, le segment 31 obture la tubulure 33 et isole le raccord 11 de la distribution d'air comprimé, ce qui a pour effet de laisser pénétrer dans ledit raccord le matériau qui forme des tronçons de matériau 24.

Le cadencement de l'air comprimé qui engendre une segmentation du matériau dans la tuyauterie 12 peut être synchronisé avec le malaxage, autrement dit avec le gavage du raccord 11 par les pales 7 avec du matériau. Dans ce cas, le rotor 30 du distributeur rotatif est relié par un accouplement 36 (figures 1, 5 et 6) au rotor 5 du malaxeur.

Cependant, il n'est pas nécessaire de synchroniser le cadencement et dans ce cas, le rotor 30 du distributeur est accouplé à un moteur 37 indépendant (figure 13). Bien entendu, le cadencement peut être aléatoire ou bien établi suivant une règle variable en relation avec le malaxage, cette règle étant modifiable à volonté en fonction du résultat obtenu dans le transport. Ladite règle peut résulter d'un programmateur sensible à différents paramètres mesurés dans le malaxeur et le transporteur, tels que le pas des tronçons de matériau 24, la pression dans les tampons 25, la compacité desdits tronçons, la pression d'éjection hors de la tuyauterie 12 ...

Par ailleurs, le distributeur 30 peut être d'un type autre que rotatif et par exemple à tiroir linéaire.

Dans la description qui suit, il s'agit toujours d'un distributeur rotatif synchronisé, mais il doit être clair que cela n'exclut pas les variantes évoquées ci-dessus.

Une deuxième forme de réalisation illustrée par les figures 7 et 8, met en oeuvre un troisième mode d'exécution du procédé qui consiste, en relation de temps, à faire communiquer de façon périodique la cuve avec la tuyauterie en séparant les cycles de communication par des temps d'arrêt et à injecter de l'air comprimé dans ladite tuyauterie en aval de ladite cuve suivant des cycles successifs d'injection établis pendant les arrêts de l'écoulement du matériau et séparés par des temps sensiblement morts. Dans cette deuxième forme de réalisation, les distributions d'air comprimé à la cuve 8 et à la tuyauterie 12 sont alternées, ce qui permet de tronçonner et de constituer un tampon d'air 25, puis de former un tronçon dense 24 et ainsi de suite. Pour ces distributions, le rotor du distributeur rotatif 28 est une pale diamétrale 40 séparant dans le boîtier fixe 29 deux alvéoles 41 et 42 symétriques. Ce boîtier 29 comporte deux tubulures 33 et 34 diamétralement opposées sur lesquelles sont branchées les dérivations 14 et 15 précitées qui aboutissent respectivement sur la tubulure 16 de la cuve et la tubulure 17 du raccord. Une troisième tubulure radiale 43 est prévue sur ledit boîtier 29 pour le branchement de la conduite générale d'alimentation 13. La tubulure 43 est, dans l'exemple représenté, équidistante des deux précédentes 33 et 34.

Lorsque la pale 40 occupe la position représentée sur la figure 7, l'alvéole tournant 41 met en communication la conduite 13 avec la dérivation 14 et par son intermédiaire avec la cuve 8, tandis que l'alvéole tournant 42 forme une capacité tampon s'opposant à toute pénétration d'air comprimé dans le manchon 11.

Lorsque la pale 40 occupe la position représentée sur la figure 8, l'alvéole tournant 42 met en communication la conduite 13 avec la dérivation 15 et par son intermédiaire avec canalisation 12, tandis que l'alvéole tournant 41 forme une capacité tampon s'opposant à toute pénétration d'air comprimé dans la cuve 8.

Le rotor 40 du distributeur 28 permet donc d'alterner la distribution de l'air comprimé vers la cuve 8 et vers la tuyauterie 12. Dans l'exemple représenté où la tubulure 43 est à égale distance angulaire des tubulures 33 et 34, la durée d'insufflation d'air comprimé est la même pour la cuve et la tuyauterie.

Cependant, il peut être avantageux de pondérer les distributions d'air comprimé vers la cuve et la tuyauterie. La variante illustrée par les figures 9 et 10 permet d'obtenir ce résultat.

Suivant cette variante, les tubulures 33 et 34 sont placées radialement sur le boîtier 29, alors que la tubulure 43 est disposée axialement, c'est-à-dire parallèlement à l'axe du rotor, sur une paroi 44 du boîtier 29 perpendiculaire à cet axe. La paroi 44 est montée tournante et donc réglable angulairement par pivotement suivant les flèches F. Dès lors, la durée du branchement de la tubulure 43 sur la tubulure 33, donc sur la cuve 8, par la cavité tournante 42 est plus longue (ou plus courte suivant la position de la tubulure 43), que celle du branchement de la tubulure 43 sur la tubulure 34, donc sur la tuyauterie 12, par la cavité tournante 41.

En outre, il peut être avantageux de superposer partiellement les deux distributions ou de les séparer par des temps morts. Dans ce cas, deux distributeurs du type représenté sur les figures 5 et 6 peuvent être jumelés en accouplant leurs rotors ; ceux-ci ont alors une ouverture angulaire déterminée par les temps d'interruption des distributions et leur décalage angulaire de préférence réglable, est établi en relation avec les programmes de distribution.

Bien entendu, le nombre d'alternances des distributions pour chaque tour du rotor malaxeur peut être accru comme cela ressort de la variante illustrée par la figure 11. Dans cet exemple, deux alternances par tour sont générées par un rotor à deux pales diamétrales 44 et 45 perpendiculaires l'une à l'autre. Ces pales délimitent dans le boîtier fixe 29 du distributeur 28 quatre alvéoles tournants 46 à 49 qui défilent devant les tubulures 33, 34 et 43. Les tubulures 33 et 34, branchées sur la cuve 8 et la tuyauterie 12 respectivement, sont, dans cet exemple, radiales et perpendiculaires l'une à l'autre, tandis que la tubulure 43 est axiale et située entre les précédentes. Cette tubulure 43 peut être réglable angulairement suivant les flèches F.

Bien entendu, le nombre d'alvéoles peut être supérieur à quatre ou limité à trois.

Suivant la troisième forme de réalisation illustrée par la figure 12, la distribution du matériau dans le raccord 11 prolongé par la tuyauterie 12 est cadencée par un moyen autre qu'un cerceau. Ce moyen est une vanne 50 comportant un manchon écrasable 51 dont les extrémités sont pincées avec étanchéité entre un corps fixe 52 et deux parties coaxiales distinctes du manchon 11. Une chambre pneumatique 53 est délimitée par le manchon écrasable 51 dans le corps fixe 52. Cette chambre 53 et la tubulure 17 du raccord 11 sont susceptibles d'être alternativement branchées sur la dérivation 15 par deux distributeurs couplés 28 et 28' d'un type semblable à celui illustré par les figures 8 et 9.

Les pales 40 et 40' de ces distributeurs sont décalées de 90° l'une par rapport à l'autre et sont accouplées à l'arbre du moteur précité 37.

La tubulure 43 du distributeur 28 est branchée sur la dérivation 15, tandis que la tubulure 34 de ce distributeur est reliée par un élément de conduite 35 à une tubulure 54 de la vanne 50 débouchant dans la chambre 53.

La tubulure 43' du distributeur 28' est également branchée sur la dérivation 15 mais sa tubulure 33 diamétralement opposée à la tubulure 34 de l'autre distributeur 28 est reliée par un élément de conduite 55 à la tubulure 17 du raccord 11 prolongé par la tuyauterie 12.

La dérivation 14 est branchée sur la tubulure 16 de la cuve de malaxage 8 de sorte que celle-ci est sous pression permanente. Sous les effets conjugués de cette pression et des pales 7, le matériau est refoulé dans le raccord 11 et, si la vanne 50 est ouverte, dans la tuyauterie 12.

Les pales 40 et 40' étant dans la position représentée sur la figure 12, l'air comprimé en provenance de la dérivation 15 est dirigé
- par le distributeur 28 vers la chambre pneumatique 53 pour déformer le manchon 51 et ainsi fermer la vanne 50 qui interrompt alors l'écoulement du matériau,
- et par le distributeur 28' vers la tubulure 17 pour tronçonner le matériau et former dans la tuyauterie des tampons d'air 25.

Dans une autre position non représentée, les pales 40 et 40' interrompent la communication précitée, ce qui a pour effet, d'une part, d'ouvrir la vanne 50 et de laisser le matériau s'écouler, d'autre part, de ne pas insuffler d'air comprimé dans la tuyauterie.

Quelle que soit la forme de réalisation choisie du cadencement, il est important de noter que les pales 7 sont écartées de la paroi de la cuve 8 d'une distance "d" (figure 14) au moins égale à la grosseur "g" maximale des agrégats 56. Cette particularité est extrêmement intéressante. En effet, dans les réalisations connues illustrées par la figure 13, les pales en tournant rayent et usent la paroi de la cuve, étant donné qu'elles entraînent les agrégats les plus gros qui se trouvent au contact de ladite paroi. Par contre, dans l'invention, les pales sont écartées de la paroi de la cuve et génèrent contre celle-ci une couche adhérente 57 de matériau ; dans ces conditions lorsque lesdites pales entraînent un gros agrégats 56, celui-ci racle la couche 57 sans endommager la cuve.

Ainsi que cela est exposé dans ce qui précède, le cadencement du matériau et/ou de l'air comprimé permet de n'utiliser qu'une partie de la puissance pour le compresseur 3, la partie restante étant consommée pour entraîner le rotor 5 du malaxeur 6.

Dans ces conditions, deux circuits d'air comprimé sont prévus :
- le premier à seuil minimal de pression, 4 bars par exemple, pour le transport cadencé du matériau,
- le deuxième à seuil maximal de pression, 7 bars par exemple, pour actionner des outils ou matériels du bâtiment et des travaux publics.

Plusieurs modes de régulation du compresseur 3 sont schématisés sur les figures 15 à 17.

Suivant le premier mode de régulation selon la figure 15, l'admission 58 du compresseur 3 est ou non branchée à travers un clapet piloté 59 ou autre organe d'obturation sur une conduite d'alimentation 60 en air ambiant. Le refoulement 61 du compresseur est branché sur un circuit unique 62 d'air comprimé à travers une vanne d'isolation 63 à commande manuelle. Une dérivation 64 prise entre le refoulement 61 et la vanne 63 est branchée sur un relais 65, réglable manuellement à deux valeurs de déclenchement correspondant aux seuils précités (4 et 7 bars par exemple). Le relais pilote le clapet 59.

Supposant que le circuit 62 alimente les moyens de transport cadencé du matériau, le relais 65 est préréglé à 4 bars. Lorsque la pression dans ledit circuit atteint 4 bars, le relais 65 déclenche le clapet 59 pour qu'il ferme l'admission d'air au compresseur. Lorsque la pression baisse dans le circuit, le relais 65 pilote le clapet 59 pour qu'il s'ouvre.

Supposant maintenant que le circuit 62 alimente les moyens de travaux publics, le relais 65 est préréglé à 7 bars. La pression dans le circuit varie et lorsqu'elle atteint 7 bars, le relais 65 provoque la fermeture du clapet 59, lequel s'ouvre lorsque la pression baisse.

Dans le deuxième mode de régulation selon la figure 16, on retrouve le clapet 59, mais celui-ci est piloté par deux relais 66 et 67 préréglés à 4 bars et 7 bars respectivement. Le refoulement 61 du compresseur 3 alimente, par l'intermédiaire d'une vanne trois voies 68, sélectivement un circuit 69 à seuil minimal de pression (4 bars) et un circuit 70 à seuil maximal de pression (7 bars).

Ce mode de régulation selon la figure 16 fonctionne de la même façon que celui selon la figure 15. Simplement, la sélection du circuit d'utilisation par la vanne 68 permet de sélectionner en même temps le relais pilote.

Le troisième mode de régulation schématisé sur la figure 17 intervient également pour réguler automatiquement l'alimentation d'un vérin pneumatique 71 prévu pour l'actionnement d'une benne basculante 72 de chargement de la cuve 8 du malaxeur. La benne est montée pivotante autour d'un axe 73 de la cuve. Le vérin comporte un cylindre 74 dans lequel est monté coulissant un piston 75 séparant une chambre de relèvement 76 d'une chambre d'abaissement 77. Le cylindre 74 est articulé autour d'un axe 78 de la cuve de malaxage 8, tandis que la tige 79 du piston 75 est articulée autour d'un axe 80 de la benne de chargement 72.

Dans ce troisième mode de régulation, on retrouve le clapet piloté 59, placé à l'admission du compresseur 3 dont le refoulement 61 est branché sur des éléments de conduite 81 et 82 alimentant un circuit principal à seuil minimal de pression 69 (4 bars par exemple) à travers une vanne d'isolement 83 et respectivement, un circuit principal à seuil maximal de pression 70 (7 bars par exemple) à travers une vanne d'isolement 84. On y retrouve également les relais pilotes 66 taré à 4 bars et 67 taré à 7 bars ; le relais 66 est sensible à la pression régnant dans une dérivation 85 du circuit 69 prise en aval de la vanne 83 ; le relais 67 est sensible à la pression régnant dans une dérivation 86 du circuit 70 prise en amont de la vanne 84. Les deux relais 66 et 67 pilotent le clapet 59 à travers un sélecteur 87.

Par ailleurs, un distributeur 88 à commande manuelle est interposé entre d'une part, une dérivation 89 et, d'autre part, deux circuits secondaires 90 et 91 d'alimentation des chambres 76 et 77 en fluide sous pression à seuil maximal est respectivement à seuil minimal. La dérivation 89 est prise sur le circuit principal 69 à seuil minimal de pression entre la vanne 83 et une autre vanne 92 isolant le distributeur 28 qui contrôle le transport cadencé du matériau. Par ailleurs, un distributeur 93 est piloté, grâce à une dérivation 94, par la pression régnant dans le circuit secondaire 90 d'alimentation de la chambre de relèvement 76 du vérin 71 de la benne. Le distributeur est placé en travers de la dérivation 85, soit pour sensibiliser le relais pilote 66 avec la pression du circuit principal 69 (position représentée sur la figure 18), soit pour isoler le relais pilote en le mettant à l'air libre et en bouchant ladite dérivation 85 (autre position).

Le distributeur 88 est susceptible d'occuper trois positions :
- la position médiane représentée sur la figure 17, dans laquelle la dérivation 89 et les circuits secondaires 90, 91 sont obturés,
- la position extrême dite gauche dans laquelle le tiroir est déplacé vers la droite pour amener le carré de gauche en regard de la dérivation 89 et des circuits secondaires 90, 91 ; dans cette position, la dérivation 89 est branché sur le circuit secondaire 91 pour alimenter la chambre d'abaissement 77 du vérin en air comprimé à seuil minimal de pression (4 bars), tandis que le circuit secondaire 90 est mis à l'air libre,
- la position extrême dite droite dans laquelle le tiroir est déplacé vers la gauche pour amener le carré de droite en regard de la dérivation 89 et des circuits secondaires 90, 91 ; dans cette position, la dérivation 89 est branchée sur le circuit secondaire 90 pour alimenter la chambre de relèvement 76 du vérin en air comprimé à seuil minimal de pression (4 bars), tandis que le circuit secondaire 91 est mis à l'air libre ; le distributeur piloté 93 ferme le relais pilote 66 qui intervient sur le sélecteur 87 pour brancher sur le clapet piloté 59 le relais pilote 67 à seuil maximal de pression (7 bars). Le circuit principal 69 isolé par la vanne 92 est toujours alimenté en air comprimé, mais sa pression peut s'élever jusqu'au seuil maximal (7 bars) alors qu'elle n'atteignait que le seuil minimal (4 bars) et ainsi, la chambre de relèvement 76 du vérin est alimentée en air comprimé à seuil maximal de pression.

Pour abaisser la benne 72, il suffit de manoeuvrer le distributeur 88 vers la droite. La pression dans le circuit secondaire 90 chute et le distributeur piloté 93 ouvre le relais pilote 66 à seuil minimal de pression. Le clapet piloté 59 stabilise la pression de l'air comprimé au seuil minimal dans le circuit principal 69 de sorte que cet air comprimé parvenant à la chambre 77 du vérin provoque l'abaissement de la benne 72.

Ce troisième mode de régulation permet de relever la benne qui est lourdement chargée en utilisant le seuil maximal de pression, puisque, lorsqu'on relève la benne pour charger la cuve en matériau, celle-ci est vide et donc ne nécessite pas de puissance de malaxage.

Par contre, lorsque la cuve a été remplie et que le malaxage absorbe de la puissance, la benne ne peut être abaissée qu'en utilisant le seuil minimal de pression.

Lorsque ladite benne est abaissée et la cuve remplie, la vanne 92 peut être ouverte et le transport cadencé du matériau est généré à travers le distributeur rotatif 28 par de l'air comprimé à seuil minimal de pression.

Enfin, pour prévenir les conséquences d'un coincement du malaxeur par un très gros agrégat, la disposition illustrée par la figure 18 peut être mise en oeuvre. Le réducteur 4 est scindé en deux composants 95 et 96 contenant les étages successifs de la réduction. Le carter 97 du premier composant 95 est fixe et supporté à une extrémité par l'arbre du malaxeur auquel est accouplé l'arbre de sortie 98 de ce composant, ainsi qu'à son autre extrémité, par une biellette 99. L'arbre d'entrée 100 de ce premier composant 95 est accouplé à l'arbre de sortie du deuxième composant 96 et constitue un pivot pour le carter 101 de ce deuxième composant qui forme ainsi bascule.

L'arbre d'entrée 102 du deuxième composant 96 est accouplé à une poulie 103 reliée par une courroie sans fin 104 à une poulie menante 105 accouplée à l'arbre de sortie 106 du moteur.

Lorsque le couple résistant du malaxeur 6 dont le rotor tourne dans le sens de la flèche R, augmente brusquement, la traction T de la transmission 103 à 105 ajoutée au couple de réaction du composant 96 engendre un pivotement de ce composant 96 dans le sens de la flèche M.

Un levier 107 prolongé par un doigt 108 fait corps avec le composant pivotant 96 et est tiré par un ressort 109 vers le bas c'est-à-dire à l'opposé de la traction T. Ce doigt est susceptible de coopérer avec un crochet 110 articulé autour d'un axe fixe 111 et repoussé par un ressort 112 contre une butée 113.

Lorsque la résistance du malaxeur est normale, la transmission 103 à 105 soumise à l'action pesante du composant 96 et à l'action élastique du ressort 109 est tendue. Par contre, lorsque cette résistance croît brusquement, le composant 96 pivote vers le haut dans le même sens de la flèche M et le doigt 108 efface le crochet 110 puis s'y suspend. La courroie 104 patine et le moteur n'est pas surchargé.

## Revendications

1. Procédé pour le transport pneumatique de matériaux (27) en vrac tels que du mortier de chape, du béton, du sable, des gravillons... consistant à malaxer le matériau sous pression pneumatique dans une cuve (8) branchée, à sa sortie (11), sur une tuyauterie de transport (12) et concomitament à insuffler de l'air comprimé dans ladite tuyauterie en aval de la cuve, le matériau étant malaxé à l'aide d'un rotor (5) muni de pales (7) susceptibles, au cours de la rotation du rotor, d'amener des pelletées de matériau (27) devant la sortie (11) de la cuve,
caractérisé en ce que le transport dans ladite tuyauterie (12) est cadencé en alimentant celle-ci de façon périodique en air comprimé à l'aide d'un organe de cadencement, raccordé à une tubulure d'injection d'air comprimé dans ladite tuyauterie et constitué par un distributeur rotatif (28) accouplé au rotor (5) pour synchroniser le cadencement de l'air comprimé avec l'alimentation de la tuyauterie de transport en matériau.

2. Procédé selon la revendication 1, caractérisé en ce que l'on utilise le distributeur (28) pour, en opposition de phase avec le cadencement de l'air comprimé alimentant la tuyauterie de transport (12), alimenter la cuve (8) en air comprimé.

3. Procédé selon la revendication 1, caractérisé en ce qu'il consiste, en relation de temps, à faire communiquer de façon périodique la cuve (8) avec la tuyauterie de transport (12) en séparant les cycles de communication par des temps d'arrêt et à injecter de l'air comprimé dans ladite tuyauterie (12) en aval de ladite cuve suivant des cycles successifs d'injection établis pendant les arrêts de l'écoulement du matériau et séparés par des temps sensiblement morts.

4. Procédé selon l'une quelconque des revendications 1 à 3, caractérisé en ce que, pour optimiser la puissance du moteur entraînant le compresseur et le malaxeur, on limite la pression de l'air comprimé utilisée pour le transport du matériau et on se sert de la puissance non utilisée du moteur pour malaxer, la puissance totale du moteur étant destinée à délivrer de l'air comprimé à pression plus élevée pour d'autres travaux que le malaxage et le transport pneumatique.

5. Transporteur-malaxeur pour le transport pneumatique de matériaux (27) en vrac tels que du mortier de chape, du béton, du sable, des gravillons .... comportant un malaxeur (6) ayant une cuve (8) branchée, à sa sortie (11), sur une tuyauterie de transport (12) et un rotor (5) muni de pales (7) susceptibles, au cours de la rotation du rotor, d'amener des pelletées de matériau (27) devant ladite sortie (11), le transporteur-malaxeur comportant, en outre, un moteur (2) entraînant un compresseur d'air (3), et par l'intermédiaire d'un réducteur (4), le rotor (5) du malaxeur (6), le compresseur étant branché (14, 16) sur la cuve (8) dudit malaxeur (6) et sur une tubulure (17) d'injection d'air comprimé raccordée à la tuyauterie de transport (12) en aval de ladite cuve (8),
caractérisé en ce qu'il comporte au moins un organe (28) de cadencement de l'alimentation de la tuyauterie de transport (12) en air comprimé, cet organe étant constitué par un distributeur rotatif (28), branché sur le circuit d'air comprimé (13) du compresseur (3) et raccordé à la tubulure (17) d'injection d'air comprimé pour diriger ou non l'air comprimé vers cette tubulure, ledit distributeur étant accouplé au rotor (5) pour synchroniser le cadencement de l'air comprimé avec l'alimentation de la tuyauterie de transport en matériau (27).

6. Transporteur-malaxeur selon la revendication 5, caractérisé en ce que le distributeur rotatif (28) est également raccordé à une tubulure (16) d'injection de l'air comprimé dans la cuve (8).

7. Transporteur-malaxeur selon l'une des revendications 5 et 6, caractérisé en ce qu'il comporte, en outre, un organe (50) de cadencement pour la distribution du matériau synchronisé avec ledit organe (28) de cadencement de l'alimentation de la tuyauterie de transport (12) en air comprimé.

8. Transporteur-malaxeur selon la revendication 7, caractérisé en ce que l'organe de cadencement pour la distribution du matériau comprend une vanne (50) à manchon écrasable (51).

9. Transporteur-malaxeur selon la revendication 8, caractérisé en ce que la vanne (50) à manchon écrasable (51) comprend un corps (52) qui délimite autour de ce manchon (51) branché en série sur la tuyauterie (12), une chambre pneumatique (53) reliée périodiquement à la source d'air comprimé.

10. Transporteur-malaxeur selon la revendication 9, caractérisé en ce que la chambre pneumatique (53) de la vanne (50) à manchon écrasable (51) est branchée sur le circuit d'air comprimé (13) du compresseur (3) par l'intermédiaire d'un distributeur (28, 28') de cadencement, l'air comprimé étant dirigé tantôt vers ladite chambre (53), tantôt vers ladite tubulure (17) d'injection d'air comprimé.

11. Transporteur-malaxeur selon l'une quelconque des revendications 5 à 10, caractérisé en ce que le distributeur rotatif (28) pour le cadencement de l'air comprimé comporte un rotor (30 ; 40 ; 44, 45) qui délimite, dans un boîtier fixe (29), au moins un alvéole tournant (32 ; 41, 42 ; 46 à 49) susceptible de mettre ou non en communication au moins deux tubulures dudit boîtier (43, 34, 33) branchées, la première (43) sur l'alimentation en air comprimé (13), et la deuxième (34) sur la tuyauterie de transport (12).

12. Transporteur-malaxeur selon la revendication 11, caractérisé en ce que le boîtier fixe (29) comporte une troisième tubulure (33) branchée sur la cuve (8).

13. Transporteur-malaxeur selon l'une quelconque des revendications 11 et 12, caractérisé en ce que le rotor du distributeur (30) est un noyau (31) en forme de segment cylindrique, les tubulures (33,34) étant orientées suivant un angle inférieur à celui que délimité l'alvéole tournant (41).

14. Transporteur-malaxeur selon l'une quelconque des revendications 11 et 12, caractérisé en ce que le rotor du distributeur est une pale diamétrale (40) séparant dans le boîtier (29) deux alvéoles (41, 42) symétriques, une première tubulure (43) du boîtier est branchée sur l'alimentation en air comprimé (13) tandis qu'une deuxième (34) et une troisième (33) tubulures sont branchées respectivement sur la tuyauterie de transport (12) et sur la cuve (8) du malaxeur (6) ou sur la chambre (53) de la vanne (50) à manchon écrasable (51) pour alterner les distributions d'air comprimé.

15. Transporteur-malaxeur selon l'une quelconque des revendications 11 et 12, caractérisé en ce que le rotor (44, 45) du distributeur (28) comporte au moins trois alvéoles (46 à 49) séparés par des cloisons (44, 45) et défilant devant une première tubulure (43) du boîtier (29) branchée sur l'alimentation en air comprimé (13), ces alvéoles étant susceptibles de relier l'une après l'autre la première tubulure (43) à une deuxième (34) puis une troisième (33) tubulures, distantes angulairement en correspondance avec l'ouverture angulaire desdits alvéoles et branchées respectivement sur la tuyauterie de transport (12) et sur la cuve (8) du malaxeur (6), ou sur la chambre (53) de la vanne (50) à manchon écrasable (51) pour alterner les distributions d'air comprimé.

16. Transporteur-malaxeur selon l'une quelconque des revendications 14 et 15, caractérisé en ce que la tubulure (43) du distributeur rotatif (28) est portée par une paroi (44) du corps de celui-ci, montée pivotante autour de l'axe dudit corps et réglable angulairement pour déterminer la proportion relative des distributions d'air comprimé vers les deuxième et troisième tubulures.

17. Transporteur-malaxeur selon l'une quelconque des revendications 5 à 16, caractérisé en ce que les pales (7) du rotor (5) du malaxeur (6) sont écartées relativement à la cuve d'une distance (d) au moins égale à la grosseur maximale (g) des agrégats (56) constituant le matériau à malaxer et transporter, de façon à générer une couche adhérente de matériau (57) protégeant la cuve (8).

18. Transporteur-malaxeur selon l'une quelconque des revendications 5 à 17, caractérisé en ce que le compresseur (3) coopère avec au moins un dispositif de régulation (59,65 ou 67,68) limitant à deux seuils la pression de l'air comprimé distribué, l'air comprimé distribué au seuil maximal (7 bars par exemple) étant destiné à tous travaux autres que le malaxage, tandis que l'air comprimé distribué au seuil minimal (4 bars par exemple) est destiné au transport cadencé et le reste de la puissance du moteur, au malaxage.

19. Transporteur-malaxeur selon la revendication 18, caractérisé en ce que le dispositif de régulation comporte un organe d'obturation (59) monté sur l'admission d'air (58) du compresseur (3) et piloté par un relais (65) réglable manuellement aux deux seuils précités et sensible à la pression de l'air comprimé à la sortie (61) du compresseur.

20. Transporteur-malaxeur selon la revendication 19, caractérisé en ce qu'un organe d'obturation (59) est monté sur l'admission d'air (58) au compresseur (3) et piloté par deux relais (66,67) réglés l'un au seuil maximal et l'autre au seuil minimal, ces relais étant sensibles à la pression des deux circuits (69,78) alimentés par le compresseur et séparés l'un de l'autre par une vanne d'isolation à commande manuelle (68).

21. Transporteur-malaxeur selon la revendication 20, dont la cuve (8) du malaxeur (6) coopère avec une benne basculante de chargement (72) mue par un vérin (71) dont le piston (75) sépare dans le cylindre (74) une chambre de relèvement (76) d'une chambre d'abaissement (77) de la benne, caractérisé en ce que la chambre de relèvement (76) et la chambre d'abaissement (77) sont raccordées à des circuits secondaires de pression à seuil maximal (90) et respectivement de pression à seuil minimal (91) branchés sélectivement par un distributeur à commande manuelle (88) sur une dérivation (89) prise sur un premier circuit principal d'alimentation (69) reliant le compresseur (3) au distributeur rotatif précité (28), entre deux vannes d'isolation (83,92) dont la première isole ledit distributeur rotatif et la deuxième isole un deuxième circuit principal d'alimentation (82,70) à pression maximale dérivé en amont, le dispositif de régulation considéré comportant un distributeur (93) piloté par le circuit secondaire précité à seuil de pression maximal (90) du vérin (71) et susceptible d'isoler le relais pilote à seuil de pression minimal (66) branché sur une dérivation (85) prise sur le premier circuit principal (69) entre les deux vannes d'isolation (83,92).

22. Transporteur-malaxeur selon l'une quelconque des revendications 5 à 21, comportant un réducteur interposé entre le rotor (5) du malaxeur (6) et une transmission sans fin (102 à 104) accouplée au moteur (2), caractérisé en ce que, pour prévenir les conséquences d'un coincement du malaxeur par un gros agrégat, le réducteur est scindé en deux composants (95,96) dont le carter (97) de l'un (95) est fixe, tandis que le carter (101) de l'autre (96) est pivotant (98) et soumis aux actions antagonistes d'un organe élastique (109) et du couple menant de la transmission.

## Claims

1. Process for the pneumatic conveyance of bulk materials (27) such as surfacing mixture, concrete, sand, stone chips... consisting of mixing the material under pneumatic pressure in a barrel (8), connected at its outlet (11), to conveyance piping (12) and of concomitantly blowing compressed air into the said piping downstream of the barrel, the material being mixed by means of a rotor (5) provided with paddles (7) which bring pelletized material (27) before the outlet (11) of the barrel during rotation of the rotor,
characterised by the fact that conveyance in the said piping (12) is pulsed by supplying the latter periodically with compressed air by means of a pulsing organ, connected to a pipe for injection of compressed air into the said piping, and consisting of a rotary distributor (28) linked to the rotor (5) to synchronize the pulsing of the compressed air with the supply of material to the conveyance piping.

2. Process as described in claim 1, characterised by the fact that the distributor (28) is used to supply the barrel (8) with compressed air in phase opposition to the pulsing of the compressed air supplied to the conveyance piping (12).

3. Process as described in claim 1, characterised by the fact that it consists, with regard to time, of causing the barrel (8) to communicate periodically with the conveyance piping (12) while separating the communication cycles with stoppage periods and injecting compressed air into the said piping (12) downstream of the said barrel in successive injection cycles located during the stoppages in the flow of material and separated by substantially dead periods.

4. Process as described in any one of claims 1 to 3, characterised by the fact that, to optimize the power of the motor driving the compressor and the mixer, the pressure of the compressed air used to convey the material is limited and the unused power of the motor is used for mixing, the total power of the motor being used to deliver compressed air at higher pressure for work other than mixing and pneumatic conveyance.

5. Conveyer-mixer for the pneumatic conveyance of bulk materials (27) such as surfacing mixture, concrete, sand, stone chips... including a mixer (6) having a barrel (8) connected, at its outlet (11), to conveyance piping (12) and a rotor (5) provided with paddles (7) which bring pelletized material (27) before the said outlet (11) during the rotation of the rotor, the conveyer-mixer also including a motor (2) driving an air-compressor (3) and, via reduction gears (4), the rotor (5) of the mixer (6), the compressor being connected (14, 16) to the barrel (8) of the said mixer (6) and to a compressed air injection pipe (17) connected to the conveyance piping (12) downstream of the said barrel (8),
characterised by the fact that it includes at least one organ (28) for pulsing the supply of compressed air to the conveyance piping (12), this organ consisting of a rotary distributor (28) connected to the compressed air circuit (13) of the compressor (3) and connected to the compressed air injection pipe (17) either to direct or not direct compressed air to this pipe, the said distributor being linked to the rotor (5) to synchronize the pulsing of the compressed air with the supply of material (27) to the conveyance piping.

6. Conveyor-mixer as described in claim 5, characterised by the fact that the rotary distributor (28) is also connected to a pipe (16) for injection of compressed air into the barrel (8).

7. Conveyor-mixer as described in either of claims 5 or 6, characterised by the fact that it also includes a pulsing organ (50) for the distribution of the material synchronized with the said organ (28) for pulsing the supply of compressed air to the conveyance piping (12).

8. Conveyor-mixer as described in claim 7, characterised by the fact that the pulsing organ for distribution of material comprises a valve (50) with a crushable sleeve (51).

9. Conveyor-mixer as described in claim 8, characterised by the fact that the valve (50) with a crushable sleeve (51) comprises a body (52) which defines around this sleeve (51) connected in series with the piping (12), a pneumatic chamber (53) connected periodically to the source of compressed air.

10. Conveyor-mixer as described in claim 9, characterised by the fact that the pneumatic chamber (53) of the valve (50) with a crushable sleeve (51) is connected to the compressed air circuit (13) of the compressor (3) through a pulsing distributor (28, 28'), the compressed air being at one time directed to the said chamber (53) and at another time to the said compressed air injection pipe (17).

11. Conveyor-mixer as described in any one of claims 5 to 10, characterised by the fact that the rotary distributor (28) for pulsing the compressed air includes a rotor (30; 40; 44, 45) which defines, within a fixed casing (29), at least one rotating cell (32; 41; 42; 46 to 49) which can place in communication or otherwise at least two pipes on the said casing (43, 34, 33), the first (43) connected to the compressed air supply (13) and the second (34) to the conveyance piping (12).

12. Conveyor-mixer as described in claim 11, characterised by the fact that the fixed casing (29) includes a third pipe (33) connected to the barrel (8).

13. Conveyor-mixer as described in either of claims 11 or 12, characterised by the fact that the rotor of the distributor (30) is a core (31) in the form of a segment of cylinder, the pipes (33, 34) being oriented at an angle smaller than that defined by the rotating cell (41).

14. Conveyor-mixer as described in either of claims 11 or 12, characterised by the fact that the rotor of the distributor is a diametrical paddle (40) separating two symmetrical cells (40, 41) in the casing (29), a first pipe (43) on the casing is connected to the compressed air supply (13) while a second (34) and a third (33) pipe are connected respectively to the conveyance piping (12) and to the barrel (8) of the mixer (6) or to the chamber (53) of the valve (50) with a crushable sleeve (51) to alternate the distribution of compressed air.

15. Conveyor-mixer as described in either of claims 11 or 12, characterised by the fact that the rotor (44, 45) of the distributor (28) has at least three cells (46 to 49) separated by partitions (44, 45) and passing in front of a first pipe (43) on the casing (29) connected to the compressed air supply (13), these cells being able to link sequentially the first pipe (43) to a second (34) and then a third (33) pipe with angular spacing corresponding to the angular opening of the said cells and respectively connected to the conveyance piping (12) and to the barrel (8) of the mixer (6), or to the chamber (53) of the valve (50) with the crushable sleeve (51) to alternate the distribution of compressed air.

16. Conveyor-mixer as described in either of claims 14 or 15, characterised by the fact that the pipe (43) of the rotary distributor (28) is carried by a wall (44) of the body of the latter, mounted pivotally about the axis of the said body and angularly adjustable to determine the relative proportions of the distribution of compressed air to the second and third pipes.

17. Conveyor-mixer as described in any one of claims 5 to 16, characterised by the fact that the paddles (7) of the rotor (5) of the mixer (6) are spaced from the barrel by a distance (d) at least equal to the maximum size (g) of the aggregates (56) constituting the material to be mixed and conveyed, so as to generate an adherent layer of material (57) protecting the barrel (8).

18. Conveyor-mixer as described in any one of claims 5 to 17, characterised by the fact that the compressor (3) co-operates with at least one control device (59, 65 or 67, 68) limiting the pressure of the compressed air distributed to two thresholds, the compressed air distributed at the maximum threshold (7 bars for example) being intended for all operations other than mixing, while the compressed air distributed at the minimum threshold (4 bars for example) is intended for pulsed conveyance and the balance of the power of the motor for mixing.

19. Conveyor-mixer as described in claim 18, characterised by the fact that the control device includes a closure organ (59) mounted on the air intake (58) of the compressor (3) and operated by a relay (65) which is manually adjustable to the two above-mentioned thresholds and sensitive to the pressure of the compressed air at the outlet (61) of the compressor.

20. Conveyor-mixer as described in claim 19, characterised by the fact that a closure organ (59) is mounted on the air intake (58) to the compressor (3) and operated by two relays (66, 67) adjusted one to the maximum threshold and the other to the minimum threshold, these relays being sensitive to the pressures in the two circuits (69, 78) supplied by the compressor and separated from each other by a manually controlled isolating valve (68).

21. Conveyor-mixer as described in claim 20, in which the barrel (8) of the mixer (6) co-operates with a tipping loading bucket (72) moved by a ram (71) of which the piston (75) divides the cylinder (74) into a chamber for raising (76) and a chamber for lowering (77) the bucket, characterised by the fact that the raising chamber (76) and the lowering chamber (77) are connected to secondary circuits respectively of pressure at maximum threshold (90) and of pressure at minimum threshold (91) connected selectively by a manually controlled distributor (88) to a tap (89) from a first main supply circuit (69) linking the compressor (3) to the above-mentioned rotary distributor (28), between two isolating valves (83, 92) of which the first isolates the said rotary distributor and the second isolates a second main supply circuit (82, 70) at maximum pressure tapped off upstream, the control device in question including a distributor (93) operated by the above-mentioned secondary circuit with the maximum pressure threshold (90) of the ram (71) and able to isolate the minimum pressure threshold operating relay (66) connected to a tap (85) from the second main circuit (69) between the two isolating valves (83, 92).

22. Conveyor-mixer as described in any one of claims 5 to 21, including a reduction gear interposed between the rotor (5) of the mixer (6) and a perpetual drive (102 to 104) linked to the motor (2), characterised by the fact that, in order to prevent the consequences of the mixer being jammed by large aggregate, the reduction gear is divided into two components (95, 96) of which the housing (97) of the one (95) is fixed, while the housing (101) of the other (96) is pivoting (98) and subject to the opposed influences of an elastic organ (109) and of the driving torque of the drive.

## Patentansprüche

1. Pneumatisches Transportverfahren für Schüttgut (27) wie Mörtel, Beton, Sand oder Kies ..., das darin besteht, das Gut unter pneumatischem Druck in einer Wanne (8) zu mischen, die an ihrem Ausgang (11) an eine Förderleitung (12) angeschlossen ist, und zugleich Druckluft in die genannte Förderleitung unterhalb der Wanne zu blasen, wobei das Gut mittels eines Rotors (5) gemischt wird, der mit Rotorblättern (7) versehen ist, die geeignet sind, während der Drehung des Rotors das Gut (27) schaufelweise vor den Ausgang (11) der Wanne zu bringen,
dadurch gekennzeichnet, daß der Transport in die genannte Rohrleitung (12) durch regelmäßiges Einleiten von Druckluft in diese mittels einer Takteinrichtung getaktet ist, die mit einem Drucklufteinlaß der genannten Förderleitung verbunden ist und aus einem Drehverteiler (28) besteht, der an den Rotor (5) angeschlossen ist, um den Takt der Druckluft mit der Zufuhr des Guts (27) in die Förderleitung zu synchronisieren.

2. Verfahren nach Anspruch 1, dadurch gekennzeichnet, daß der Verteiler (28) eingesetzt wird, um gegenphasig zum Takt der Druckluft, die in die Förderleitung (12) eingeleitet wird, die Wanne (8) mit Druckluft zu versorgen.

3. Verfahren nach Anspruch 1, dadurch gekennzeichnet, daß es in zeitlicher Hinsicht darin besteht, die Wanne (8) periodisch mit der Förderleitung (12) zu verbinden, indem die Verbindungszyklen durch Stillstandszeiten unterbrochen werden, und Druckluft in die genannte Leitung (12) unterhalb der genannten Wanne entsprechend aufeinanderfolgenden Injektionszyklen einzuleiten, die während der Stillstände der Guteinfüllung stattfinden und durch merkliche Totzeiten getrennt sind.

4. Verfahren nach einem der Ansprüche 1 bis 3, dadurch gekennzeichnet, daß zur Optimierung der Leistung des Motors, der den Kompressor und den Mischer antreibt, der für den Guttransport genutzte Luftdruck begrenzt wird und die ungenutzte Leistung des Motors zum Mischen verwendet wird, wobei die Gesamtleistung des Motors dazu vorgesehen ist, Druckluft mit einem höheren Druck für andere Arbeiten als das Mischen und den pneumatischen Transport zu liefern.

5. Transport- und Mischeinrichtung für den pneumatischen Transport von Schüttgut (27) wie Mörtel, Beton, Sand oder Kies ..., zu der ein Mischer (6) gehört mit einer Wanne (8), die an ihrem Ausgang (11) an eine Förderleitung (12) angeschlossen ist, und mit einem Rotor (5), der mit Rotorblättern (7) versehen ist, die geeignet sind, während der Drehung des Rotors das Gut (27) schaufelweise vor den genannten Ausgang (11) zu bringen, wobei die Transport- und Mischeinrichtung darüber hinaus einen Motor (2) aufweist, der einen Luftkompressor (3) und, über eine dazwischen liegende Untersetzung (4) den Rotor (5) des Mischers (6) antreibt, wobei der Kompressor an die Wanne (8) des genannten Mischers (6) angeschlossen ist (14, 16) sowie an einen Drucklufteinlaß (17), der mit der Förderleitung (12) stromabwärts der genannten Wanne (8) verbunden ist,
dadurch gekennzeichnet, daß sie mindestens eine Takteinrichtung (28) aufweist, die die Zufuhr von Druckluft in die Förderleitung (12) taktet, wobei diese Einrichtung einen Drehverteiler (28) aufweist, der an den Druckluftkreis (13) des Kompressors (3) angeschlossen ist und mit dem Drucklufteinlaß (17) verbunden ist, um die Druckluft zu diesem Einfüllstutzen zu leiten oder nicht, wobei der genannte Verteiler an den Rotor (5) angeschlossen ist, um den Takt der Druckluft mit der Zufuhr von Guts (27) in die Förderleitung zu synchronisieren.

6. Transport- und Mischeinrichtung nach Anspruch 5, dadurch gekennzeichnet, daß der Drehverteiler (28) ebenso an einen Drucklufteinlaß (16) der Wanne (8) angeschlossen ist.

7. Transport- und Mischeinrichtung nach Anspruch 5 oder 6, dadurch gekennzeichnet, daß sie darüber hinaus eine Einrichtung (50) zum Takten der Verteilung des Materials aufweist, die mit der genannten Einrichtung (28), zum Takten der Zufuhr von Druckluft in die Förderleitung (12) synchronisiert ist.

8. Transport- und Mischeinrichtung nach Anspruch 7, dadurch gekennzeichnet, daß die Takteinrichtung zur Gutverteilung einen Schieber (50) mit Quetschmuffe (51) aufweist.

9. Transport- und Mischeinrichtung nach Anspruch 8, dadurch gekennzeichnet, daß der Schieber (50) mit Quetschmuffe (51) ein Bauteil (52) aufweist, das um diese an die Leitung (12) in Reihe angeschlossene Muffe (51) eine pneumatische Kammer (53) abgrenzt, die periodisch mit der Druckluftquelle verbunden wird.

10. Transpor- und Mischeinrichtung nach Anspruch 9, dadurch gekennzeichnet, daß die pneumatische Kammer (53) des Schiebers (50) mit Quetschmuffe (51) an den Druckluftstrom (13) des Kompressors (3) mittels eines Taktverteilers (28, 28') angeschlossen ist, wobei die Druckluft einmal in Richtung der genannten Kammer (53), einmal in Richtung des genannten Drucklufteinlasses (17) geleitet wird.

11. Transport- und Mischeinrichtung nach einem der Ansprüche 5 bis 10, dadurch gekennzeichnet, daß der Drehverteiler (28) zum Takten der Druckluft einen Rotor (30 ; 40 ; 44, 45) aufweist, der in einem feststehenden Gehäuse (29) mindestens eine umlaufende Kammer (32 ; 41, 42 ; 46 bis 49) abgrenzt, die geeignet ist, mindestens zwei Stutzen des genannten Gehäuses (43, 34, 33) zu verbinden oder nicht, von denen der eine (43) an die Druckluftzuführung (13) und der zweite (34) an die Förderleitung (12) angeschlossen ist.

12. Transport- und Mischeinrichtung nach Anspruch 11, dadurch gekennzeichnet, daß das feststehende Gehäuse (29) einen dritten Stutzen (33) aufweist, der an die Wanne (8) angeschlossen ist.

13. Transport- und Mischeinrichtung nach Anspruch 11 oder 12, dadurch gekennzeichnet, daß der Rotor des Verteilers (30) ein Kern (31) in Form eines Zylindersegments ist, wobei die Stutzen (33, 34) entsprechend einem Winkel ausgerichtet sind, der kleiner ist als der, der die umlaufende Kammer (41) abgrenzt.

14. Transport- und Mischeinrichtung nach Anspruch 11 oder 12, dadurch gekennzeichnet, daß der Rotor des Verteilers ein diametrales Rotorblatt (40) ist, das in dem Gehäuse (29) zwei symmetrische Kammern (41, 42) trennt, ein erster Stutzen (43) des Gehäuses an die Druckluftzufuhr (13) angeschlossen ist, während ein zweiter (34) und ein dritter (33) Stutzen an die Förderleitung (12) bzw. an die Wanne (8) der Mischeinrichtung oder an die Kammer (53) des Schiebers (50) mit Quetschmuffe (51) angeschlossen sind, um die Druckluftverteilung wechselweise zu verändern.

15. Transport- und Mischeinrichtung nach Anspruch 11 oder 12, dadurch gekennzeichnet, daß der Rotor (44, 45) des Verteilers (28) mindestens drei Kammern (46 bis 49) aufweist, die durch Trennwände (44, 45) getrennt sind und vor einem ersten Stutzen (43) des Gehäuses (29) vorbeilaufen, der an die Druckluftzuführung (13) angeschlossen ist, wobei diese Kammern geeignet sind, nacheinander den ersten Stutzen (43) mit einem zweiten (34) und dann einem dritten (33) Stutzen zu verbinden, die winklig entsprechend der winkligen Öffnung der genannten Kammern zueinander angeordnet sind und die an die Förderleitung (12) bzw. an die Wanne (8) der Mischeinrichtung (6) oder an die Kammer (53) des Schiebers (50) mit Quetschmuffe (51) angeschlossen sind, um die Druckluftverteilung zu verändern.

16. Transport- und Mischeinrichtung nach Anspruch 14 oder 15, dadurch gekennzeichnet, daß der Stutzen (43) des Drehverteilers (28) durch eine Wand (44) des Bauteils des Drehverteilers getragen wird, die um die Achse des genannten Bauteils drehbar angebracht ist und winklig verstellbar ist, um die relative Druckluftverteilung zu dem zweiten und dritten Stutzen festzulegen.

17. Transport- und Mischeinrichtung nach einem der Ansprüche 5 bis 16, dadurch gekennzeichnet, daß die Rotorblätter (7) des Rotors (5) der Mischeinrichtung (6) von der Wanne mit einem Abstand (d), der mindestens ebensogroß ist wie die Maximalgröße (g) der Zuschlagstoffe (56) hat, die das zu mischende und transportierende Gut darstellen, so daß eine festhaftende Gutschicht (57) gebildet wird, welche die Wanne (8) schützt.

18. Transport- und Mischeinrichtung nach einem der Ansprüche 5 bis 17, dadurch gekennzeichnet, daß der Kompressor (3) mit mindestens einer Regelvorrichtung (59, 65 oder 67, 68) zusammenwirkt, die in zwei Stufen die verteilte Druckluft begrenzt, wobei die auf Maximalstufe (z.B. 7 Bar) verteilte Druckluft für andere Arbeiten als das Mischen vorgesehen ist, während die auf Minimalstufe (z.B. 4 Bar) verteilte Druckluft für die getaktete Förderung und der Rest der Motorleistung für das Mischen bestimmt ist.

19. Transport- und Mischeinrichtung nach Anspruch 18, dadurch gekennzeichnet, daß die Regelvorrichtung einen Verschluß (59) aufweist, der in der Luftzuführung (58) des Kompressors (3) angeordnet ist und durch ein Schaltventil (65) gesteuert wird, das entsprechend der beiden genannten Stufen manuell verstellt wird und das sensitiv auf den Luftdruck am Ausgang (61) des Kompressors reagiert.

20. Transport- und Mischeinrichtung nach Anspruch 19, dadurch gekennzeichnet, daß ein Verschluß (59) in der Luftzuführung (58) des Kompressors (3) angeordnet ist und durch zwei Schaltventile (66, 67) verstellt wird, von denen das eine auf maximaler Stufe und das andere auf minimaler Stufe eingestellt ist, wobei diese Schaltventile sensitiv auf den Druck der beiden Kreise (69, 78) reagieren, die durch den Kompressor gespeist und voneinander durch einen manuell gesteuerten Trennschieber (68) getrennt werden.

21. Transport- und Mischeinrichtung nach Anspruch 20, bei der die Wanne (8) des Mischers (6) mit einem Füllkipper (72) zusammenwirkt, der durch eine Hebevorrichtung (71) betrieben wird, deren Kolben (75) in dem Zylinder (74) eine Hebekammer (76) von einer Senkkammer (77) der Fülleinrichtung trennt, dadurch gekennzeichnet, daß die Hebekammer (76) und die Senkkammer (77) an die sekundären Druckkreisläufe mit Maximaldruck (90) beziehungsweise mit Minimaldruck (91) angeschlossen sind, die wahlweise durch einen manuell gesteuerten Verteiler (88) an eine Leitung (89) angeschlossen sind, die von einer ersten Hauptdruckluftleitung abgeht, die den Kompressor (3) mit dem genannten Drehverteiler (28) zwischen zwei Trennschiebern (83, 92) verbindet, von denen der erste den genannten Drehverteiler abtrennt und der zweite einen zweiten, stromaufwärts abgezweigten Hauptdruckluftkreis (82, 70) mit Maximaldruck trennt, wobei die betrachtete Regelvorrichtung einen Verteiler (93) aufweist, der durch den genannten sekundären Druckkreis mit Maximaldruck (90) der Hebevorrichtung (71) gesteuert wird und geeignet ist, das Schaltventil mit Minimaldruck (66) zu trennen, das an eine Leitung (85) angeschlossen ist, die vom ersten Hauptdruckluftkreis (69) zwischen den beiden Trennschiebern (83, 92) abgeleitet wird.

22. Transport- und Mischeinrichtung nach einem der Ansprüche 5 bis 21, die eine zwischen dem Rotor (5) des Mischers (6) und einer an einen Motor (2) angekoppelten Endlosübertragung (102 - 104) angeordnete Untersetzung aufweist, dadurch gekennzeichnet, daß zur Vermeidung von Folgen eines Blockierens des Mischers durch einen groben Zuschlagstoff die Untersetzung in zwei Komponenten (95, 96) zerlegt ist, wobei das Gehäuse (97) der einen (95) feststehend ist, während das Gehäuse (101) der anderen (96) drehbar ist und den entgegengesetzten Wirkungen eines elastischen Bauteils (109) und des treibenden Moments der Übertragung ausgesetzt ist.
